# EUROPEAN PATENT APPLICATION

(11) **EP 4 694 323 A1**
(43) Date of publication of application: **11.02.2026**
(21) Application number: 23929320.2
(22) Date of filing: 30.03.2023
(51) Int. Cl.: H04W 36/00, H04W 56/00

(54) **TA INDICATION METHOD AND APPARATUS, DEVICE, STORAGE MEDIUM, AND PROGRAM PRODUCT**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2023/085178
(87) International publication number: WO 2024/197724

(57) **Abstract**

A TA indication method and apparatus, a device, a storage medium, and a program product, relating to the technical field of communications. The method comprises: a terminal device receives first information from a network device, the first information being used for determining a TA value of a target cell (310). The network device sends to the terminal device the first information used for determining the TA value of the target cell, thereby ensuring that the terminal device has obtained the TA value of the target cell when performing cell handover, there is no need to further perform uplink synchronization, and thus the time cost required by a cell handover process is reduced.

## Description

### FIELD

Embodiments of the present invention relate to the field of communication technology, and more particularly to a method and apparatus for indicating a timing advance (TA), a device, a storage medium and a program product.

### BACKGROUND

When a terminal switches from a current serving cell to a target cell, a random access process is required to obtain uplink synchronization.

In the related art, a TA value from the terminal to the target cell is measured in advance to avoid uplink synchronization, thereby reducing the time overhead needed for cell handover. However, how to indicate to the terminal the measured TA value from the terminal to the target cell still needs further discussion.

### SUMMARY

Embodiments of the present invention provide a method and apparatus for indicating a TA, a device, a storage medium and a program product. The technical solutions are as follows.

In an aspect, embodiments of the present invention provide a method for indicating a timing advance (TA). The method is performed by a terminal, and includes: receiving first information from a network device, and the first information is configured to determine a TA value of a target cell.

In some embodiments, the first information is sent in a serving cell of the terminal, and the serving cell and the target cell are in coverage of the network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell identifier (cell ID);
a configuration index; or
a timing advance group identifier (TAG ID).

In some embodiments, the first information is sent in a candidate cell, and the target cell is determined from the candidate cell.

In some embodiments, the first information is sent after a TA value of the candidate cell is measured through a random access process.

In some embodiments, the first information is a random access response (RAR).

In an aspect, embodiments of the present invention provide a method for indicating a timing advance (TA). The method is performed by a network device, and includes: sending first information to a terminal, and the first information is configured to determine a TA value of a target cell.

In some embodiments, the first information is sent in a serving cell of the terminal, and the serving cell and the candidate cell are in coverage of the network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell identifier (cell ID);
a configuration index; or
a timing advance group identifier (TAG ID).

In some embodiments, the first information is sent in a candidate cell, and the target cell is determined from the candidate cell.

In some embodiments, the first information is sent after a TA value of the candidate cell is measured through a random access process.

In some embodiments, the first information is a random access response (RAR).

In an aspect, embodiments of the present invention provide an apparatus for indicating a timing advance (TA), which includes: a receiving module, configured to receive first information from a network device, and the first information is configured to determine a TA value of a target cell.

In some embodiments, the first information is sent in a serving cell of a terminal, and the serving cell and the target cell are in coverage of the network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell identifier (cell ID);
a configuration index; or
a timing advance group identifier (TAG ID).

In some embodiments, the first information is sent in a candidate cell, and the target cell is determined from the candidate cell.

In some embodiments, the first information is sent after a TA value of the candidate cell is measured through a random access process.

In some embodiments, the first information is a random access response (RAR).

In an aspect, embodiments of the present invention provide an apparatus for indicating a timing advance (TA), which includes: a sending module, configured to send first information to a terminal, and the first information is configured to determine a TA value of a target cell.

In some embodiments, the first information is sent in a serving cell of the terminal, and the serving cell and the target cell are in coverage of a network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell identifier (cell ID);
a configuration index; or
a timing advance group identifier (TAG ID).

In some embodiments, the first information is sent in a candidate cell, and the target cell is determined from the candidate cell.

In some embodiments, the first information is sent after a TA value of the candidate cell is measured through a random access process.

In some embodiments, the first information is a random access response (RAR).

In an aspect, embodiments of the present invention provide a communication device. The communication device includes a processor and a memory, the memory stores computer programs, and the processor is configured to execute the computer programs to perform the above method at the terminal side or to perform the above method at the network device side. For example, the communication device is a terminal or a network device.

In an aspect, embodiments of the present invention provide a computer-readable storage medium having stored therein computer programs that, when executed by a processor, cause the above method at the terminal side or the above method at the network device side to be performed.

In an aspect, embodiments of the present invention provide a chip, which includes a programmable logic circuit and/or program instructions, and the chip is configured to, when runs, perform the above method at the terminal side or the above method at the network device side.

In an aspect, embodiments of the present invention provide a computer program product, which includes computer programs that are stored in a computer-readable storage medium, and that, when read by a processor from the computer-readable storage medium and executed by the processor, cause the above method at the terminal side or the above method at the network device side to be performed.

In an aspect, embodiments of the present invention provide a communication system, which includes a terminal and a network device, the terminal is configured to perform the above method at the terminal side, and the network device is configured to perform the above method at the network device side.

The technical solutions provided by embodiments of the present invention may have the following beneficial effects: the first information is sent to the terminal before the terminal is switched to the target cell, and the first information is configured to determine the TA value of the target cell, so that it is ensured that the terminal has obtained the TA value of the target cell when performing cell handover, and no uplink synchronization is required, thereby reducing the time overhead required for the cell handover process.

### BRIEF DESCRIPTION OF THE DRAWINGS

FIG. 1 is a schematic diagram of a network architecture according to an embodiment of the present invention.
FIG. 2 is a schematic diagram of a candidate cell according to an embodiment of the present invention.
FIG. 3 is a flowchart of a method for indicating a TA according to an embodiment of the present invention.
FIG. 4 is a block diagram of an apparatus for indicating a TA according to an embodiment of the present invention.
FIG. 5 is a block diagram of an apparatus for indicating a TA according to another embodiment of the present invention.
FIG. 6 is a schematic diagram of the structure of a communication device according to an embodiment of the present invention.

### DETAILED DESCRIPTION

In order to make the objectives, technical solutions and advantages of the present invention more clear, embodiments of the present invention will be further described in detail below with reference to the accompanying drawings.

The network architecture and service scenarios described in embodiments of the present invention are intended to more clearly illustrate the technical solutions of embodiments of the present invention, and do not constitute a limitation on the technical solutions provided in embodiments of the present invention. It is known to those skilled in the art that with the evolution of the network architecture and the emergence of new service scenarios, the technical solutions provided in embodiments of the present invention are also applicable to similar technical problems. The number of entities in the accompanying drawings provided in embodiments of the present invention is not limited, and may be one or more. The connection relationship shown in the accompanying drawings is used as an example, and any two entities may be connected or may not connected; the connection between the various entities may be a direct connection or an indirect connection, a wired connection or a wireless connection, which is not limited in the present invention.

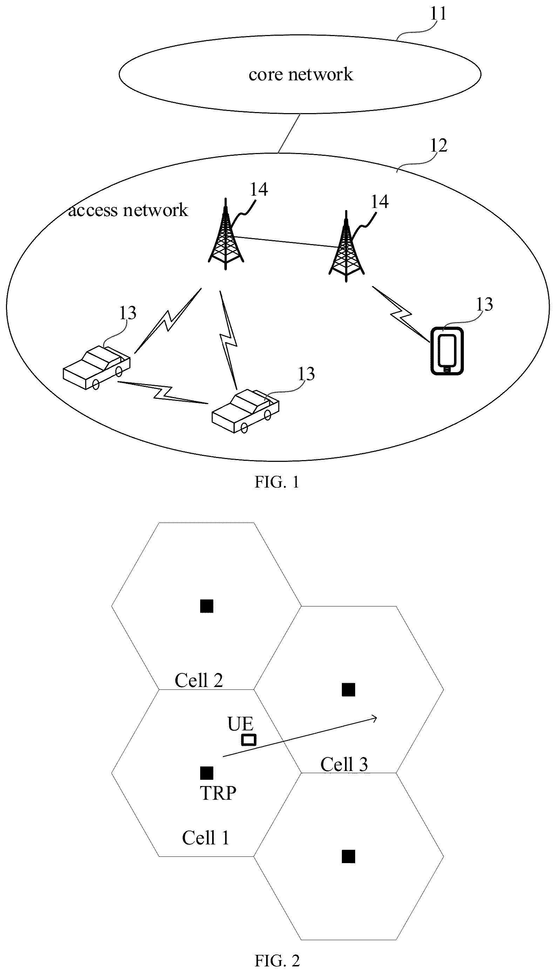

Referring to FIG. 1, a schematic diagram of a network architecture according to an embodiment of the present invention is shown. The network architecture may include: a core network 11, an access network 12, and a terminal 13.

The core network 11 includes several core network devices. The functions of the core network devices are mainly to provide user connection, user management, and service bearing, and to provide an interface to an external network as a bearer network. For example, the core network of a 5th generation (5G) new radio (NR) system may include devices such as an access and mobility management function (AMF) entity, a user plane function (UPF) entity, and a session management function (SMF) entity.

The access network 12 includes several access network devices 14. The access network in the 5G NR system may be called new generation-radio access network (NG-RAN). The access network device 14 is a device deployed in the access network 12 to provide a wireless communication function for the terminal 13. The access network device 14 may include various forms of macro base stations, micro base stations, relay stations, access points, etc. In systems using different wireless access technologies, the names of devices with the access network device function may be different. For example, in the 5G NR system, it is called gNodeB or gNB. With the evolution of the communication technology, the name of the "access network device" may change. For the convenience of description, in embodiments of the present invention, the devices mentioned above that provide the wireless communication function for the terminal 13 are collectively referred to as access network devices.

The number of terminals 13 is usually multiple, and one or more terminals 13 may be distributed in each cell managed by the access network device 14. The terminals 13 may include various devices with the wireless communication function, for example, handheld devices, vehicle-mounted devices, wearable devices, computing devices or other processing devices connected to a wireless modem, as well as various forms of user equipment, mobile stations (MS), etc. For the convenience of description, the above-mentioned devices are collectively referred to as terminals. The access network device 14 and the core network device communicate with each other via a certain air interface technology, such as an NG interface in the 5G NR system. The access network device 14 and the terminal 13 communicate with each other via a certain air interface technology, such as a Uu interface.

A terminal 13 and another terminal 13 (for example, a vehicle-mounted device and another device (such as another vehicle-mounted device, a mobile phone, a road side unit (RSU), etc.)) may communicate with each other via a direct communication interface (such as a PC5 interface). Accordingly, a communication link established based on the direct communication interface may be called a direct link or sidelink (SL). SL transmission is a direct communication and data transmission between terminals via a sidelink. Unlike a traditional cellular system in which communication data is received or sent through an access network device, SL transmission is featured by low latency and low overhead, making it suitable for communication between two terminals that are geographically close to each other, such as a vehicle-mounted device and other nearby devices. It should be noted that in FIG. 1, the vehicle-to-vehicle communication in the V2X (vehicle to everything) scenario is shown as an example, however SL technology may be applied to various scenarios in which terminals communicate directly with each other. In other words, the terminal in the present invention refers to any device that communicates using the SL technology.

The "5G NR system" in embodiments of the present invention may also be referred to as a 5G system or an NR system, and those skilled in the art may understand its meaning. The technical solutions described in embodiments of the present invention may be applicable to the 5G NR system or to a subsequent evolution system after the 5G NR system.

Before introducing the technical solutions of the present invention, an overview of some background technical knowledge involved in the present invention is provided. The following related techniques may be arbitrarily and optionally combined with the technical solutions of embodiments of the present invention, and all such combinations fall within the scope of protection of embodiments of the present invention. Embodiments of the present invention include at least some of the following aspects.

Layer 1/Layer 2 triggered mobility (LTM, also called L1/L2 based inter-cell mobility or L1/L2 based cell handover) is proposed in the related art, in which the network device maintains a plurality of candidate cells for the terminal. As shown in FIG. 2, cell 1 is a serving cell of the terminal, and the network device maintains two candidate cells, i.e., cell 2 and cell 3, for the terminal. The terminal may switch among the three cells: cell 1, cell 2 and cell 3. As the terminal moves, when a cell handover is necessary, a cell will be selected from the plurality of candidate cells as a target cell, and the terminal will switch from the current serving cell to the target cell. Different from the traditional cell handover, in order to reduce handover latency and complete the handover as quickly as possible, whether to perform a handover is determined based on an L1 measurement result, and handover signaling is also designed to be dynamic.

Generally speaking, when switching to the target cell, a random access is required to obtain uplink synchronization. In order to complete the cell handover as quickly as possible, it is considered in LTM to measure a TA value from the terminal to each cell in advance, that is, the TA value of each candidate cell is measured before the cell handover is performed.

However, after the TA from the terminal to the candidate cell is measured, how to indicate the TA value of the candidate cell to the terminal still needs further discussion.

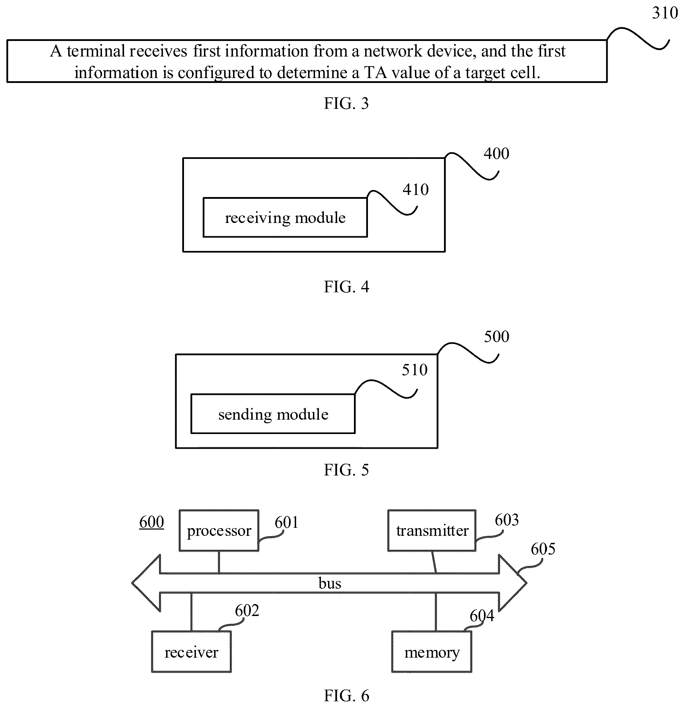

Referring to FIG. 3, FIG. 3 is a flowchart of a method for indicating a TA according to an embodiment of the present invention. The method may be applied to the network architecture shown in FIG. 1. The method may include the following step 310.

In step 310, a terminal receives first information from a network device, and the first information is configured to determine a TA value of a target cell.

Accordingly, before step 310, the network device sends the first information to the terminal.

A candidate cell refers to a candidate cell maintained by the network device for the terminal, and the terminal may perform cell handover between a current serving cell and the candidate cell. The target cell refers to a cell which is determined by the terminal from at least one candidate cells, and to which the terminal will be switched. The target cell (or candidate cell) and the serving cell are in coverage of a same network device, and the network device is used to perform a method for indicating a TA at the network side. In some embodiments, the same network device may refer to the same base station or the same central unit (CU), which is not limited in the present invention.

The TA value of the target cell refers to a TA value from the terminal to the target cell.

In some embodiments, the terminal receives the first information from the network device before switching to the target cell.

In some embodiments, the terminal receives the first information, and updates a TA value of the target cell stored in the terminal according to the TA value of the target cell indicated by the first information.

In some embodiments, the first information may be sent in the serving cell or in the candidate cell.

The serving cell refers to a serving cell where the terminal is currently located, and the candidate cell refers to a candidate cell maintained by the network device for the terminal.

In some embodiments, the first information may be sent before or after the target cell is determined, which is not limited in the present invention.

According to the technical solution provided in embodiments of the present invention, the first information is sent to the terminal before the terminal is switched to the target cell, and the first information is configured to determine the TA value of the target cell, so that it is ensured that the terminal has obtained the TA value of the target cell when performing cell handover, and no uplink synchronization is required, thereby reducing the time overhead required for the cell handover process.

In some embodiments, the first information is sent in the serving cell of the terminal, and the serving cell and the candidate cell are in coverage of the network device.

In some embodiments, the serving cell and the candidate cell are in coverage of the same network device, and the network device is used to perform the method for indicating a TA at the network side. In some embodiments, the same network device may refer to the same base station or the same CU, which is not limited in the present invention.

Regarding an occasion when the network device sends the first information to the terminal in the serving cell of the terminal, the present invention provides two solutions as examples.

Solution 1: the first information is configured to indicate a TA value of at least one candidate cell. The first information is sent by the network device each time after the network device measures the TA value of the at least one candidate cell. The target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

The TA value of the candidate cell refers to an absolute value of the TA value of the candidate cell, that is, a true value of the TA value of the candidate cell, or a measured TA value of the candidate cell. In some embodiments, the first information is configured to indicate the TA value of the candidate cell, and after the terminal receives the first information, a TA value of the candidate cell stored in the terminal is updated to the TA value of the candidate cell indicated by the first information.

In some embodiments, the first information is configured to indicate an offset value of the TA value of the candidate cell relative to a TA value of the candidate cell stored in the terminal. After the terminal receives the first information, the TA value of the candidate cell stored in the terminal is updated according to the TA value of the candidate cell stored in the terminal, and the offset value of the TA value of the candidate cell relative to the TA value of the candidate cell stored in the terminal, which is indicated by the first information.

In some embodiments, the first information is configured to indicate an offset value of the TA value of the candidate cell relative to a TA value of a serving cell. After the terminal receives the first information, a TA value of the candidate cell stored in the terminal is updated according to the TA value of the serving cell, and the offset value of the TA value of the candidate cell relative to the TA value of the serving cell, which is indicated by the first information.

In some embodiments, the number of bits required to indicate the TA value of the candidate cell is greater than the number of bits required to indicate the offset value of the TA value of the candidate cell relative to the TA value of the candidate cell stored in the terminal. For example, 12 bits are required to indicate the TA value of the candidate cell, and 6 bits are required to indicate the offset value of the TA value of the candidate cell relative to the TA value of the candidate cell stored in the terminal.

In some embodiments, the network device determines whether the TA value of the candidate cell indicated by the first information is the TA value of the candidate cell or the offset value of the TA value of the candidate cell relative to the TA value of the candidate cell stored in the terminal. That is, the network device may determine the TA value of the candidate cell indicated by the first information according to actual conditions. In this way, the amount of data required to be transmitted for communication between the network device and the terminal may be reduced when it is not necessary to indicate the TA value of the candidate cell.

That is, the network device sends the first information configured to indicate the TA value of the candidate cell to the terminal, only in a case where the terminal needs the TA value of the candidate cell. In a case where the terminal may determine the TA value of the candidate cell based on the offset value of the TA value of the candidate cell relative to the TA value of the candidate cell stored in the terminal, the network device sends the first information to the terminal, and the first information is configured to indicate the offset value of the TA value of the candidate cell relative to the TA value of the candidate cell stored in the terminal.

In some embodiments, in a case where the terminal has not stored a TA value of the candidate cell, the network device sends the first information to the terminal, and the first information is configured to indicate the TA value of the candidate cell.

For example, when the TA value of the candidate cell is measured for the first time, the first information is configured to indicate the TA value of the candidate cell.

For example, after the TA value of the candidate cell stored in the terminal becomes invalid, the first information is configured to indicate the TA value of the candidate cell.

In some embodiments, the network device sends the first information to the terminal, the first information is used to indicate the offset value of the TA value of the candidate cell relative to the TA value of the serving cell, and the network device does not need to determine whether it is necessary to indicate the TA value of the candidate cell.

In some embodiments, the network device sends an indication information to the terminal, and the indication information is configured to instruct the terminal to measure the TA value of the candidate cell. If the network device does not send the indication information to the terminal within a specified time, the TA value of the candidate cell stored in the terminal will become invalid. After the TA value of the candidate cell stored in the terminal becomes invalid, the terminal will actively initiate the measurement of the TA value of the candidate cell. In this case, the first information sent by the network device to the terminal is configured to indicate the TA value of the candidate cell.

In some embodiments, the terminal sends a reference signal to the network device in the candidate cell, and the network device makes measurement based on the reference signal to obtain the TA value of the candidate cell. The present invention does not make a limitation to the reference information. For example, the reference signal may be a sounding reference signal (SRS).

In some embodiments, the terminal initiates a random access process to the candidate cell, and the network device measures the TA value of the candidate cell during the random access process to obtain the TA value of the candidate cell. For example, the network device measures the TA value from the terminal to the candidate cell based on a received preamble sequence to obtain the TA value of the candidate cell.

In some embodiments, the candidate cell and the serving cell of the terminal are in coverage of the same central unit (CU) (i.e., the same network device), and the candidate cell and the serving cell may communicate with each other via an F1 interface of the network device.

In some embodiments, the network device may include a plurality of total radiated powers (TRPs), each TRP corresponding to a cell (including a candidate cell or a serving cell).

In some embodiments, the TA value from the terminal to the candidate cell measured by the candidate cell may be sent by a distributed unit (DU) corresponding to the candidate cell to a CU of the network device via an F1 interface, and then sent by the CU of the network device to a DU corresponding to the serving cell via an F1 interface.

In some embodiments, the terminal sends a reference signal to the network device in the candidate cell, and the network device measures the TA value of the candidate cell based on the reference signal to obtain the TA value of the candidate cell.

In some embodiments, the terminal initiates a random access process to the candidate cell, and the network device measures the TA value of the candidate cell during the random access process to obtain the TA value of the candidate cell. For example, the network device measures the TA value from the terminal to the candidate cell based on a received preamble sequence to obtain the TA value of the candidate cell.

In some embodiments, after the TA value is obtained by the candidate cell, the TA value of the candidate cell is forwarded by the CU to the DU corresponding to the serving cell via the F1 interface.

In some embodiments, the serving cell and the candidate cell are in coverage of the same DU, and the serving cell may obtain the TA value of the candidate cell without forwarding via the F1 interface.

In some embodiments, the first information includes: respective identification information of at least one candidate cell, and a TA value corresponding to the respective identification information of the at least one candidate cell.

The identification information of the candidate cell refers to information that can uniquely identify the candidate cell.

In some embodiments, the identification information includes at least one of: a cell ID; a configuration index; or a TAG ID.

The cell ID refers to a unique identifier (ID) corresponding to a candidate cell, and the cell ID for each cell is fixed.

In some embodiments, the configuration index is index information of the candidate cell (or serving cell) configured by the network device, and the configuration index can also be used to uniquely identify the candidate cell (or serving cell). For example, when the network device pre-configures a configuration parameter of the candidate cell for a user, it assigns a logical ID to configuration information of each candidate cell. The logical ID is used to distinguish individual candidate cells.

In some embodiments, the TAG ID is configured by the network device for the candidate cell (or serving cell). In some embodiments, the same TAG ID may correspond to one or more candidate cells. For example, the network device divides the candidate cells in the same geographical location and with the same TA value into the same TA group (TAG), and the candidate cells in the TA group share the same TAG ID. If the first information is configured to indicate the TAG ID and the TA value of the candidate cell, the terminal updates the TA value of each candidate cell corresponding to the TAG ID according to the first information.

In some embodiments, the first information may be a redesigned TA indication signaling, which includes respective identification information of at least one candidate cell and a TA value corresponding to the respective identification information of the at least one candidate cell. The identification information may include at least one of: a cell ID; a configuration index; or a TAG ID.

In some embodiments, the first information may be an existing TA indication signaling, which includes respective identification information of at least one candidate cell and a TA value corresponding to the respective identification information of the at least one candidate cell. The identification information may include a TAG ID. The existing TA indication signaling refers to a signaling specified in a relevant technology for indicating a TA value of a serving cell.

In some embodiments, the first information may be a redesigned TA indication signaling, which is configured to indicate the TA value of the candidate cell; and the existing TA indication signaling is used to indicate the TA value of the serving cell.

Through the above method, the network device sends the first information to the terminal in the serving cell, and the first information is configured to indicate the TA value of at least one candidate cell, so as to ensure that the terminal has obtained the TA value of the target cell when performing cell handover, and no uplink synchronization is required, thereby reducing the time overhead required for the cell handover process.

Solution 2: the first information is used to indicate the TA value of the target cell to be switched to, and the first information is sent after the target cell is determined from the candidate cells.

In some embodiments, the first information includes: identification information of the target cell, and a TA value corresponding to the identification information of the target cell.

In some embodiments, the identification information of the target cell may include at least one of: a cell ID of the target cell; a configuration index of the target cell; or a TAG ID of the target cell.

Regarding the introduction of the identification information of the target cell, reference may be made to those of the identification information of the at least one candidate cell described above for their similarity, which will not be reiterated in the present invention.

In some embodiments, the first information is a cell handover command, and the cell handover command includes a TA indication field, and the TA indication field is configured to indicate the TA value of the target cell. That is, the first information may be a cell handover command. When the first information is a cell handover command, the cell handover command may include a TA indication field, and the TA indication field is configured to indicate the TA value of the target cell.

In some embodiments, the TA indication field may also be configured to indicate the identification information of the target cell and the TA value of the target cell.

In some embodiments, another indication field other than the TA indication field in the cell handover command may indicate the identification information of the target cell, and the TA indication field may only indicate the TA value of the target cell.

In some embodiments, the TA value of the target cell includes at least one of: the TA value of the target cell; or an offset value of the TA value of the target cell relative to the TA value of the serving cell.

Through the above method, after determining the target cell to which the terminal is to be switched, the TA value of the target cell is indicated to the terminal, so as to ensure that the terminal may obtain the TA value of the target cell before performing cell handover, thereby avoiding the uplink synchronization process, and reducing the time overhead required for the cell handover process.

In some embodiments, the first information is sent in a candidate cell, and the target cell is determined from the candidate cell.

In some embodiments, the terminal initiates a random access process to the candidate cell to measure the TA value. The candidate cell may indicate the TA value of the candidate cell to the terminal after measuring the TA value of the candidate cell during the random access process.

In some embodiments, the first information is sent after the TA value of the candidate cell is measured through the random access process.

In some embodiments, during the random access process, the terminal sends a preamble sequence to the network device in the candidate cell, and the network device measures the TA value of the candidate cell according to the preamble sequence to obtain the TA value of the candidate cell.

In some embodiments, the first information is an RAR. That is, during the random access process, the TA value of the candidate cell may be indicated to the terminal through the random access response, without redesigning a new signaling to indicate the TA value of the candidate cell, thereby reducing the number of signalings that need to be transmitted between the network device and the terminal.

In some embodiments, the TA value of the candidate cell includes the TA value of the candidate cell. In this case, the DU corresponding to the candidate cell does not need to interact with the DU corresponding to the serving cell, so the TA value of the candidate cell may be directly indicated to reduce information interaction within the network device.

Through the above method, after the TA value of the candidate cell is measured in the random access process, the network device sends the first information to the terminal in the candidate cell, and the first information is configured to indicate the TA value of the candidate cell. It is ensured that the terminal may obtain the TA value of the target cell before performing cell handover, thereby avoiding the uplink synchronization process, and reducing the time overhead required for the cell handover process.

The following are apparatus embodiments of the present invention, which may be used to perform the method embodiments of the present invention. For details not described in the apparatus embodiments of the present invention, please refer to the method embodiments of the present invention.

Referring to FIG. 4, FIG. 4 shows a block diagram of an apparatus for indicating a TA according to an embodiment of the present invention. The apparatus has a function of implementing the embodiments of the method for indicating a TA at the terminal side described above, and the function may be implemented by hardware or by hardware executing corresponding software. The apparatus may be the terminal introduced above, or it may be set in the terminal. As shown in FIG. 4, the apparatus 400 may include: a receiving module 410.

The receiving module 410 is configured to receive first information from a network device, and the first information is configured to determine a TA value of a target cell.

In some embodiments, the first information is sent in a serving cell of the terminal, and the serving cell and the target cell are in coverage of the network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell ID;
a configuration index; or
a timing advance group identifier (TAG ID).

In some embodiments, the first information is sent in the candidate cell, and the target cell is determined from the candidate cell.

In some embodiments, the first information is sent after a TA value of the candidate cell is measured through a random access process.

In some embodiments, the first information is a random access response (RAR).

In the technical solutions provided in embodiments of the present invention, the first information is sent to the terminal before the terminal switches to the target cell, and the first information is configured to determine the TA value of the target cell, so as to ensure that the terminal has obtained the TA value of the target cell when performing cell handover, and no uplink synchronization is required, thereby reducing the time overhead required for the cell handover process.

Referring to FIG. 5, FIG. 5 shows a block diagram of an apparatus for indicating a TA according to another embodiment of the present invention. The apparatus has a function of implementing the embodiments of the method for indicating a TA at the network device side described above, and the function may be implemented by hardware, or by hardware executing corresponding software. The apparatus may be the network device introduced above, or it may be set in the network device. As shown in FIG. 5, the apparatus 500 may include: a sending module 510.

The sending module 510 is configured to send first information to a terminal, and the first information is configured to determine a TA value of a target cell.

In some embodiments, the first information is sent in a serving cell of the terminal, and the serving cell and the target cell are in coverage of the network device.

In some embodiments, the first information is sent after the target cell is determined.

In some embodiments, the first information includes: identification information of the target cell, and a TA value corresponding to the identification information of the target cell.

In some embodiments, the first information is a cell handover command, the cell handover command includes a TA indication field, and the TA indication field is configured to indicate the TA value of the target cell.

In some embodiments, the cell handover command is carried in a media access control - control element (MAC CE); or the cell handover command is carried in downlink control information (DCI).

In some embodiments, the first information is configured to indicate a TA value of at least one candidate cell, the first information is sent by the network device each time after the network device measures the TA value of the at least one candidate cell, and the target cell is determined from the at least one candidate cell.

In some embodiments, the TA value of the candidate cell includes at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

In some embodiments, the first information includes: respective identification information of the at least one candidate cell, and a TA value corresponding to the respective identification information of the at least one candidate cell.

In some embodiments, the identification information includes at least one of:
a cell ID;
a configuration index; or
a timing advance group identifier (TAG ID).

In some embodiments, the first information is sent in the candidate cell, and the target cell is determined from the candidate cell.

In some embodiments, the first information is sent after a TA value of the candidate cell is measured through a random access process.

In some embodiments, the first information is a random access response (RAR).

In the technical solutions provided in embodiments of the present invention, the first information is sent to the terminal before the terminal switches to the target cell, and the first information is configured to determine the TA value of the target cell, so as to ensure that the terminal has obtained the TA value of the target cell when performing cell handover, and no uplink synchronization is required, thereby reducing the time overhead required for the cell handover process.

It should be noted that, in functional implementation, the apparatus according to the above embodiments are illustrated with reference to the above division of the functional modules as examples. In practical applications, the above-mentioned functions may be allocated to different functional modules as needed. That is, the internal structure of the apparatus is divided into different functional modules to perform some or all of the functions described above.

Regarding the apparatus in the above embodiments, the specific manners in which various modules perform respective operations have been described in detail in embodiments related to the method, and thus will not be elaborated here.

FIG. 6 is a block diagram of a communication device 600 according to an example embodiment of the present invention, the communication device 600 may be the terminal or the network device as described above, and the communication device 600 may include: a processor 601, a receiver 602, a transmitter 603, a memory 604 and a bus 605. The receiver 602 may be used to implement the function of the receiving module 410 in the above-mentioned apparatus embodiments, and the transmitter 603 may be used to implement the function of the sending module 510 in the above-mentioned apparatus embodiments.

The processor 601 includes one or more processing cores, and the processor 601 executes various functional applications and information processing by running software programs and modules.

The receiver 602 and the transmitter 603 may be implemented as a communication component, and the communication component may be a communication chip.

The memory 604 is connected to the processor 601 via the bus 605.

The memory 604 may be used to store computer programs, and the processor 601 is configured to execute the computer programs to perform the method for indicating a TA at the terminal side, or the method for indicating a TA at the network device side.

In addition, the memory 604 may be implemented using any type of volatile or nonvolatile memory devices, or a combination thereof, including but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM).

Embodiments of the present invention further provide a computer-readable storage medium, having stored therein computer programs that, when executed by a processor, cause the method for indicating a TA at the terminal side or the method for indicating a TA at the network device side to be performed. Optionally, the computer-readable storage medium may include: a read-only memory (ROM), a random-access memory (RAM), a solid state drive (SSD) or an optical disk, etc. The random access memory may include a resistance random access memory (ReRAM) or a dynamic random access memory (DRAM).

Embodiments of the present invention further provide a chip, including a programmable logic circuit and/or program instructions, and the chip is configured to, when runs, perform the method for indicating a TA at the terminal side or the method for indicating a TA at the network device side as described above.

Embodiments of the present invention further provide a computer program product, including computer programs that are stored in a computer-readable storage medium, and that, when read by a processor from the computer-readable storage medium and executed by the processor, cause the method for indicating a TA at the terminal side or the method for indicating a TA at the network device side as described above to be performed.

Embodiments of the present invention further provide a communication system, including a terminal and a network device, the terminal is configured to perform the method for indicating a TA at the terminal side as described above, and the network device is configured to perform the method for indicating a TA at the network device side as described above.

It should be understood that the term "indication" mentioned in embodiments of the present invention may be a direct indication, an indirect indication, or an indication of an association relationship. For example, A indicates B, which may mean that A directly indicates B, for example, B may be obtained through A; it may also mean that A indirectly indicates B, for example, A indicates C, and B may be obtained through C; it may also mean that there is an association relationship between A and B.

The term "corresponding" mentioned in embodiments of the present invention may refer to a direct or indirect correspondence between two items under discussion, or an association between two items under discussion, or a relationship of indicating and being indicated, configuring and being configured, etc.

The above-mentioned embodiments or examples are not exhaustive, but merely illustrative of some embodiments or examples, and they should not be construed as limiting the scope of protection for embodiments of the present invention. Wherever possible without contradiction, each step in a certain embodiment or example may be implemented as an independent example, and the steps may be combined arbitrarily. For example, a variant obtained by removing one or more certain steps from an embodiment or example may also be implemented as independent embodiment, and the order of the steps in a certain embodiment or example may be altered at will. Additionally, one or more optional modes or examples in an embodiment or example may be combined in any manner. Furthermore, different embodiments or examples may be arbitrarily combined with each other, for example, some or all of the steps from different embodiments or examples may be combined arbitrarily, and a certain embodiment or example may be arbitrarily combined with one or more optional modes or optional examples of other embodiments or examples.

Additionally, regarding the expressions mentioned in embodiments of the present invention, such as "A or B", "A and/or B", "at least one of A or B", "A in a case, B in another case", "A in response to a case, B in response to another case", etc., they mean that at least one of the following scenarios may be included depending on the circumstances: performing A independent of B, i.e., A is performed in some embodiments; performing B independent of A, i.e., B is performed in some embodiments; selectively performing either A or B, i.e., A or B is selectively performed in some embodiments; or performing both A and B, i.e., both A and B are performed in some embodiments. In addition, each element, each row, or each column in the table involved in embodiments of the present invention may be implemented as an independent embodiment, and any combination of elements, rows, or columns may also be implemented as an independent embodiment.

The expression "a plurality of/multiple" mentioned in embodiments of the present invention refers to two or more. The expression "and/or" describes an associated relationship of associated objects, and means that there may be three relationships, for example, the expression "A and/or B" may represent the following three cases: A exists alone, A and B exist at the same time, and B exists alone. The symbol "/" generally indicates an "or" relationship of associated objects before and after it.

The term "predefined" mentioned in embodiments of the present invention may be implemented by pre-saving a corresponding code or table in a device (for example, a terminal or a network device) or may be implemented in other manners that may be used to indicate relevant information, and the specific implementation manner is not limited in the present invention. For example, the term "predefined" may refer to what is defined in a protocol.

The term "protocol" mentioned in embodiments of the present invention may refer to a standard protocol in the communication field, for example, it may include an LTE protocol, an NR protocol, and related protocols used in future communication systems, which is not limited in the present invention.

The expression "greater than or equal to" mentioned in embodiments of the present invention may refer to greater than or equal to, or greater than, and the term "less than or equal to" may refer to less than or equal to, or less than.

In addition, the step numbers described in embodiments of the present invention are merely illustrative of a possible sequence of execution of the steps. In some other embodiments, the above steps may be executed not in the numbered order as shown; for example, two steps with different numbers may be executed simultaneously, or two steps with different numbers may be executed in the reverse order to that shown in the figures, which is not limited in embodiments of the present invention.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "when it is determined".

It may be recognized by those skilled in the art that in one or more examples above, the functions described in embodiments of the present invention may be implemented using hardware, software, firmware, or any combination thereof. When implemented using the software, the functions may be stored in a computer-readable medium or transmitted as one or more instructions or codes in the computer-readable medium. The computer-readable medium includes a computer storage medium and a communication medium, and the communication medium includes any medium that facilitates transmission of a computer program from one place to another. The storage medium may be any available medium that can be accessed by a general purpose or special purpose computer.

The above are example embodiments of the present invention and are not intended to limit the present invention. Any modifications, equivalent substitutions, improvements, etc. made within the spirit and principles of the present invention shall be included in the protection scope of the present invention.

## Claims

1. A method for indicating a timing advance (TA), performed by a terminal, comprising:
receiving first information from a network device, wherein the first information is configured to determine a TA value of a target cell.

2. The method according to claim 1, wherein the first information is sent in a serving cell of the terminal, and the serving cell and the target cell are in coverage of the network device.

3. The method according to claim 1 or 2, wherein the first information is sent after the target cell is determined.

4. The method according to any one of claims 1 to 3, wherein the first information comprises: identification information of the target cell, and a TA value corresponding to the identification information of the target cell.

5. The method according to any one of claims 1 to 4, wherein the first information is a cell handover command, the cell handover command comprises a TA indication field, and the TA indication field is configured to indicate the TA value of the target cell.

6. The method according to claim 5, wherein the cell handover command is carried in a media access control - control element (MAC CE); or the cell handover command is carried in downlink control information (DCI).

7. The method according to claim 1 or 2, wherein the first information is configured to indicate a TA value of at least one candidate cell, the first information is sent by the network device each time after the network device measures the TA value of the at least one candidate cell, and the target cell is determined from the at least one candidate cell.

8. The method according to claim 7, wherein the TA value of the candidate cell comprises at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

9. The method according to claim 7 or 8, wherein the first information comprises: respective identification information of the at least one candidate cell, and a TA value corresponding to the respective identification information of the at least one candidate cell.

10. The method according to claim 4 or 9, wherein the identification information comprises at least one of:
a cell identifier (cell ID);
a configuration index; or
a timing advance group identifier (TAG ID).

11. The method according to claim 1, wherein the first information is sent in a candidate cell, and the target cell is determined from the candidate cell.

12. The method according to claim 11, wherein the first information is sent after a TA value of the candidate cell is measured through a random access process.

13. The method according to claim 11 or 12, wherein the first information is a random access response (RAR).

14. A method for indicating a timing advance (TA), performed by a network device, comprising:
sending first information to a terminal, wherein the first information is configured to determine a TA value of a target cell.

15. The method according to claim 14, wherein the first information is sent in a serving cell of the terminal, and the serving cell and the candidate cell are in coverage of the network device.

16. The method according to claim 14 or 15, wherein the first information is sent after the target cell is determined.

17. The method according to any one of claims 14 to 16, wherein the first information comprises: identification information of the target cell, and a TA value corresponding to the identification information of the target cell.

18. The method according to any one of claims 14 to 16, wherein the first information is a cell handover command, the cell handover command comprises a TA indication field, and the TA indication field is configured to indicate the TA value of the target cell.

19. The method according to claim 18, wherein the cell handover command is carried in a media access control - control element (MAC CE); or the cell handover command is carried in downlink control information (DCI).

20. The method according to claim 14 or 15, wherein the first information is configured to indicate a TA value of at least one candidate cell, the first information is sent by the network device each time after the network device measures the TA value of the at least one candidate cell, and the target cell is determined from the at least one candidate cell.

21. The method according to claim 20, wherein the TA value of the candidate cell comprises at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

22. The method according to claim 20 or 21, wherein the first information comprises: respective identification information of the at least one candidate cell, and a TA value corresponding to the respective identification information of the at least one candidate cell.

23. The method according to claim 17 or 21, wherein the identification information comprises at least one of:
a cell identifier (cell ID);
a configuration index; or
a timing advance group identifier (TAG ID).

24. The method according to claim 14, wherein the first information is sent in a candidate cell, and the target cell is determined from the candidate cell.

25. The method according to claim 24, wherein the first information is sent after a TA value of the candidate cell is measured through a random access process.

26. The method according to claim 24 or 25, wherein the first information is a random access response (RAR).

27. An apparatus for indicating a timing advance (TA), comprising:
a receiving module, configured to receive first information from a network device, wherein the first information is configured to determine a TA value of a target cell.

28. The apparatus according to claim 27, wherein the first information is sent in a serving cell of a terminal, and the serving cell and the target cell are in coverage of the network device.

29. The apparatus according to claim 27 or 28, wherein the first information is sent after the target cell is determined.

30. The apparatus according to any one of claims 27 to 29, wherein the first information comprises: identification information of the target cell, and a TA value corresponding to the identification information of the target cell.

31. The apparatus according to any one of claims 27 to 30, wherein the first information is a cell handover command, the cell handover command comprises a TA indication field, and the TA indication field is configured to indicate the TA value of the target cell.

32. The apparatus according to claim 31, wherein the cell handover command is carried in a media access control - control element (MAC CE); or the cell handover command is carried in downlink control information (DCI).

33. The apparatus according to claim 27 or 28, wherein the first information is configured to indicate a TA value of at least one candidate cell, the first information is sent by the network device each time after the network device measures the TA value of the at least one candidate cell, and the target cell is determined from the at least one candidate cell.

34. The apparatus according to claim 33, wherein the TA value of the candidate cell comprises at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

35. The apparatus according to claim 33 or 34, wherein the first information comprises: respective identification information of the at least one candidate cell, and a TA value corresponding to the respective identification information of the at least one candidate cell.

36. The apparatus according to claim 30 or 35, wherein the identification information comprises at least one of:
a cell identifier (cell ID);
a configuration index; or
a timing advance group identifier (TAG ID).

37. The apparatus according to claim 27, wherein the first information is sent in a candidate cell, and the target cell is determined from the candidate cell.

38. The apparatus according to claim 37, wherein the first information is sent after a TA value of the candidate cell is measured through a random access process.

39. The apparatus according to claim 37 or 38, wherein the first information is a random access response (RAR).

40. An apparatus for indicating a timing advance (TA), comprising:
a sending module, configured to send first information to a terminal, wherein the first information is configured to determine a TA value of a target cell.

41. The apparatus according to claim 40, wherein the first information is sent in a serving cell of the terminal, and the serving cell and the target cell are in coverage of a network device.

42. The apparatus according to claim 40 or 41, wherein the first information is sent after the target cell is determined.

43. The apparatus according to any one of claims 40 to 42, wherein the first information comprises: identification information of the target cell, and a TA value corresponding to the identification information of the target cell.

44. The apparatus according to any one of claims 40 to 43, wherein the first information is a cell handover command, the cell handover command comprises a TA indication field, and the TA indication field is configured to indicate the TA value of the target cell.

45. The apparatus according to claim 44, wherein the cell handover command is carried in a media access control - control element (MAC CE); or the cell handover command is carried in downlink control information (DCI).

46. The apparatus according to claim 40 or 41, wherein the first information is configured to indicate a TA value of at least one candidate cell, the first information is sent by a network device each time after the network device measures the TA value of the at least one candidate cell, and the target cell is determined from the at least one candidate cell.

47. The apparatus according to claim 46, wherein the TA value of the candidate cell comprises at least one of:
the TA value of the candidate cell;
an offset value of the TA value of the candidate cell relative to a TA value of the candidate cell stored in the terminal; or
an offset value of the TA value of the candidate cell relative to a TA value of a serving cell.

48. The apparatus according to claim 46 or 47, wherein the first information comprises: respective identification information of the at least one candidate cell, and a TA value corresponding to the respective identification information of the at least one candidate cell.

49. The apparatus according to claim 43 or 48, wherein the identification information comprises at least one of:
a cell identifier (cell ID);
a configuration index; or
a timing advance group identifier (TAG ID).

50. The apparatus according to claim 40, wherein the first information is sent in a candidate cell, and the target cell is determined from the candidate cell.

51. The apparatus according to claim 50, wherein the first information is sent after a TA value of the candidate cell is measured through a random access process.

52. The apparatus according to claim 50 or 51, wherein the first information is a random access response (RAR).

53. A communication device, comprising a processor and a memory, wherein the memory stores computer programs, and the processor is configured to execute the computer programs to perform the method according to any one of claims 1 to 13, or perform the method according to any one of claims 14 to 26.

54. A computer-readable storage medium, having stored therein computer programs that, when executed by a processor, cause the method according to any one of claims 1 to 13 or the method according to any one of claims 14 to 26 to be performed.

55. A chip, comprising a programmable logic circuit and/or program instructions, and the chip is configured to, when runs, perform the method according to any one of claims 1 to 13 or the method according to any one of claims 14 to 26.

56. A computer program product, comprising computer programs that are stored in a computer-readable storage medium, and that, when read by a processor from the computer-readable storage medium and executed by the processor, cause the method according to any one of claims 1 to 13 or the method according to any one of claims 14 to 26 to be performed.

57. A communication system, comprising a terminal and a network device, wherein the terminal is configured to perform the method according to any one of claims 1 to 13, or to perform the method according to any one of claims 14 to 26.
